# EUROPEAN PATENT SPECIFICATION

(11) **EP 2 397 314 B1**
(45) Date of publication and mention of the grant of the patent: **29.05.2013**
(21) Application number: 11170381.5
(22) Date of filing: 17.06.2011
(51) Int. Cl.: B29D 30/00, B29D 30/06, B60C 19/00

(54) **Method for making pneumatic tire with foam noise damper**
Verfahren zur Herstellung eines Luftreifens mit Schaumgeräuschdämpfer
Procédé de fabrication de pneu avec amortisseur de bruit en mousse

(30) Priority: 21.06.2010 US 819535; 24.11.2010 US 953551
(43) Date of publication of application: 21.12.2011
(73) Proprietor: The Goodyear Tire & Rubber Company, Akron, OH 44316-0001 (US)
(72) Inventor: Sandstrom, Paul Harry, Cuyahoga Falls, OH Ohio 44223 (US); Majumdar, Ramendra Nath, Hudson, OH Ohio 44236 (US); Sundkvist, Karl Eric, Akron, OH Ohio 44313 (US); Bormann, René Louis, 7462 Moesdorf (LU); Dong-Rong Pan, Eddy, Stow, OH Ohio 44224 (US)
(74) Representative: Kutsch, Bernd

(56) References cited:
- EP-A1- 1 577 123
- EP-A1- 2 017 092
- EP-A1- 2 075 112
- EP-A1- 2 138 300
- EP-A1- 2 138 331
- EP-A2- 1 762 373
- EP-A2- 1 795 377
- JP-A- 2007 022 043

## Description

### Field of the Invention

This invention relates to a method of making a tire having a foam noise damper. In particular, the invention relates to protecting a foam noise damper during cure of a tire, where the foam noise damper is disposed on the innerliner surface.

### Background of the Invention

Government regulations and consumer preferences continue to compel a reduction in the acceptable noise levels produced from the tires of passenger vehicles. One source of road noise is resonance within the air chamber enclosed by the innermost surface of the tire and the rim. One type of effort to reduce tire noise is damping the sound from the air vibration in the air chamber, which efforts have focused mainly on altering the innermost surface of the tire adjacent the tire carcass. In one approach, foam material is disposed as a noise damper in the inner cavity by attaching the foam to the innerliner of the tire, which is effective in reducing noise due to the tire cavity resonance at 200 to 300 Hz. However, the attachment of such a foam noise damper to a tire innerliner is problematic.

Carcasses of pneumatic green tires are built as a series of layers of flexible high modulus cords encased in a low modulus rubber. An innerliner is positioned to form the innermost surface of the tire. The green tire is cured in a curing press using a curing bladder, which forces expansion of the tire. During curing, the innerliner expands with the carcass, which is forced against the indentations in the curing mold to form the tread of the tire, and all components are co-cured so as to provide a substantially cohesive bond between one and another.

The innerliner for a pneumatic tubeless tire is typically formed from a compound containing a high proportion by weight of a halobutyl rubber due to its good barrier properties. Before the tire is cured, the entire inner surface of the innerliner and/or the outer surface of the curing bladder are coated with a release agent. The release agent is commonly referred to as a "lining cement" when used on the surface of the innerliner, and as a "bladder lube" or "bladder spray" when used on the curing bladder. The release agent facilitates removal of the curing bladder from the innerliner after curing so that the innerliner is not damaged. The innerliner (sometimes also called squeegee) for a pneumatic tube-type tire is typically a thin layer of ply coat stock to protect the tube from direct contact with nylon. These innerliners normally do not contain halobutyl rubber since barrier properties are not required.

Thus, prior to bonding a foam noise damper to the cured innerliner, in prior art methods the innerliner must be cleaned to remove contaminants present on the innerliner surface from the molding operation. In particular, the release agent must be removed from the innerliner surface. Solvents have typically been used for this cleaning operation. Solvents effective for removing the release agents contain hazardous air pollutants. These solvents are thus subject to environmental regulations, which have become more stringent in the recent past. It would thus be desirable to eliminate the need for solvent cleaning of the innerliner surface in order to comply with strict environmental regulations. In addition, solvent cleaning is labor intensive and costly due to its hazardous nature, such that significant cost savings may be realized by elimination of the solvent cleaning process. Alternatively, preparation of the innerliner for application of a foam noise damper may involve buffing the innerliner to provide a surface suitable for adhesion, see for example US-B- 7,669,628.

EP-A- 2 138 331 describes a method for manufacturing a pneumatic tire wherein a sound-absorbing polyurethane strip is attached to the innerliner of the tire.

### Definitions

"Carcass" means the tire structure apart from the belt structure, tread, undertread, and sidewall rubber over the plies, but including the beads.

"Innerliner" means the layer or layers of elastomer or other material that form the inside surface of a tire and that contain the inflating fluid within the tire.

The terms "cure" and "vulcanize" are intended to be interchangeable terms unless otherwise noted.

The terms "green" and "uncured" are intended to be interchangeable unless otherwise noted.

"Virgin surface" means a surface, whether cured or not, that has not been subjected to a cleaning process and that has not come in contact with a release agent.

### Summary of the Invention

The invention relates to a method in accordance with claim 1.

Dependent claims refer to preferred embodiments of the invention.

In one aspect of the invention, the foam noise damper is located between the virgin surface of the green tire innerliner and the barrier layer.

The foam noise damper is a silicone rubber foam noise damper.

### Brief Description of the Drawings

The accompanying drawings, which are incorporated in and constitute a part of this specification, illustrate embodiments of the invention and, together with a general description of the invention given above, and the detailed description given below, serve to explain the invention.
FIG. 1 is a sectional view showing an embodiment of the present invention.
FIG. 2 is a plan view, not to scale, of an assembly of a strip of a barrier layer long enough to overlie both the entire circumferential surface of a rolled sheet of innerliner and the entire circumferential surface of a foam noise damper, and to provide a pull-tab.
FIG. 3 is a perspective view schematically illustrating positioning of a prepared innerliner, barrier layer and foam noise damper (as shown in FIG. 2) on a tire building drum.
FIG. 4 is a plan view, not to scale, of an assembly of a strip of a barrier layer peeled away from the innerliner to reveal the foam noise damper of a cured tire.

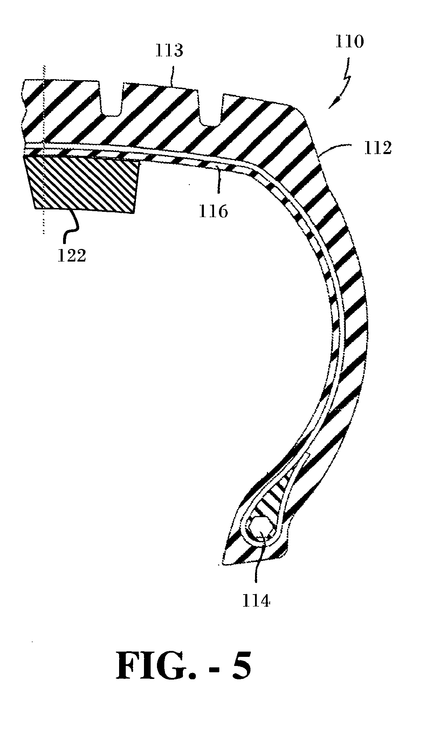

FIG. 5 is a partial cross-section of a cured tire after removal of a barrier layer (as shown in FIG. 4) having a foam noise damper adhered to the innerliner surface.

### Detailed Description

In accordance with the present invention, a foam noise damper adhered to the innerliner of a green tire is protected from contamination of mold release agent and from the harsh pressure and temperature of the curing process, by overlaying a protective barrier layer over the foam noise damper and adhering the protective barrier to the green virgin innerliner surface. In one embodiment, the protective barrier layer is a thermoformable film adapted to stretch with the tire materials during the shaping and curing process. In one embodiment, the protective barrier layer is a thin rubber sheet. In one embodiment, the barrier layer is coated with a pressure-sensitive adhesive (PSA) that is pressed to the green virgin innerliner surface to reliably and releasably adhere the thermoformable film. The optional PSA is particularly effective in preventing movement of the barrier layer during high-pressure spraying of lining cement to the innerliner. The invention may be further understood by reference to the Figures.

Like reference numerals are used throughout the several Figures to refer to like components, and like reference numerals are used to refer to components in both the cured and uncured (green) states.

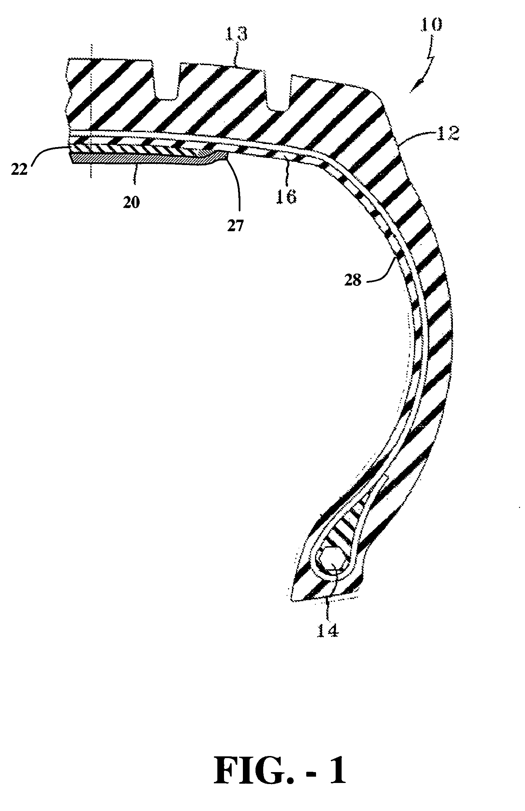

FIG. 1 depicts in cross-section an uncured, or "green," tire assembly 10 after tire building in accordance with the present invention. Green tire assembly 10 includes a carcass 12 having a tread 13 disposed on the outermost surface, where tread 13 is the portion of the tire assembly 10 that contacts the ground during operation of a cured tire. During cure, grooves are impressed into the tread by a mold. As is known in the art, the carcass 12 may include one or more plies of cords and the carcass wraps the bead portions 14 of the green tire 10. An innerliner 16 is disposed inside the carcass 12 so as to face an air chamber. A compressed foam noise damper 22 is disposed on the radially inward green virgin surface of the innerliner 16. In accordance with the present invention, the foam noise damper 22 is compressed and protected with removable barrier layer 20 adhered to the green virgin surface of innerliner 16. As will be described further herein, after cure of the green tire 10, barrier layer 20 is removed from the foam noise damper 22 and innerliner 16 to allow relaxation of the foam noise damper 22 and thereby expand to its full volume.

Formation of the tire assembly 10, involves assembling the innerliner 16 in a green state, i.e., an uncured state, adjacent the green tire carcass 12, positioning the foam noise damper 22 on the green virgin surface of innerliner 16, and overlaying barrier layer 20 over and thereby compressing compressed foam noise damper 22 and adhering edges 27 of the barrier layer 20 to the green virgin surface of green innerliner 16. A green tread strip 13 is assembled adjacent the outermost surface of the tire carcass 12. This green tire assembly 10 is then placed into a curing mold (not shown) such that the green tread strip 13 is positioned against the mold surface (not shown), and the barrier layer 20 is furthest from the mold surface so as to form the innermost layer, with the foam noise damper positioned between the innerliner 16 and the barrier layer 20.

Typically, before all components are in place within the mold, a release agent (not shown) is applied to the green innerliner 16 and over the barrier layer 20. The release agent, which is also referred to as lining cement, is generally applied by a high-pressure spray. Examples of lining cement-type release agent include organopolysiloxane- or silicone-based materials, such as polydimethylsiloxane with powdered mica or crystalline silica. In one embodiment, a pressure sensitive adhesive (not shown) is applied between barrier layer 20 and the green virgin surface 28 of innerliner 16 such that the high-pressure lining cement spray does not displace the barrier layer 20 and the foam noise damper 22.

After the green assembly 10 with protected foam noise damper is placed in the mold, an expandable curing bladder (not shown) is then expanded against the innerliner 16 and barrier layer 20 to press the green tire assembly 10 into the mold surface to press the green tread strip 13 into a tread pattern formed in the mold surface. A vulcanization temperature is applied in the mold while the tire assembly 10 is subjected to the pressure from the expanded curing bladder for a time sufficient to cure the tire assembly 10. The barrier layer 20 protects the compressed foam noise damper 22 from contamination by the mold release agent and from the harsh pressure and temperature environment of the tire mold during cure of the green tire 10. After curing is completed, the curing bladder is deflated and stripped from the innerliner 16 and the barrier layer 20.

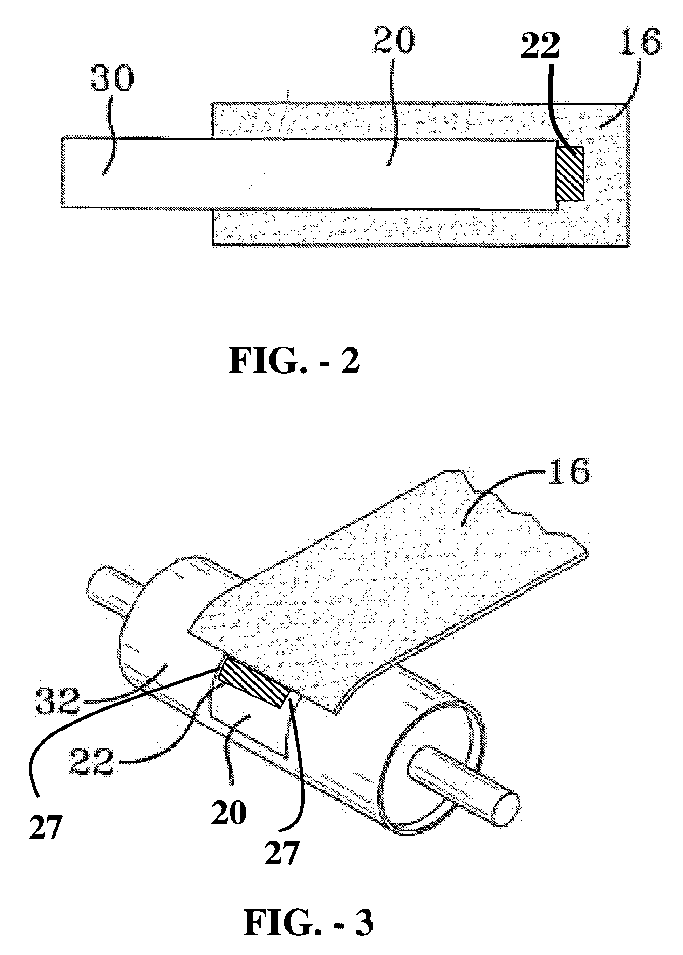

One embodiment of a method of the present invention may be described with further reference to FIGS. 2-3. As illustrated in FIG. 2, prior to the innerliner 16 being positioned on a building drum 32, a foam noise damper 22 is positioned symmetrically about the longitudinal central axis of the green innerliner 16. A barrier layer 20, having a width greater than the width of the foam noise damper 22 but less than that of green innerliner 16, is positioned symmetrically about the longitudinal central axis of the green innerliner 16 such that the foam noise damper 22 is between the green innerliner 16 and the barrier layer 20. The edges 27 of barrier layer 20 are pressed to the green virgin surface of the green innerliner 16 causing the barrier layer 20 to be reliably and removably adhered to the green innerliner 16. At the same time, the foam noise damper 22 is compressed from its fully expanded state to a compressed state by the barrier layer 20. In one embodiment, there is an overhand or "overlap" 30, sufficient to afford a pull-tab, to facilitate easy removal of the barrier layer 20 after cure. Alternatively, no overlap is included.

As shown in FIG. 3, from 2 cm to 20 cm of one end of the barrier layer 20 extends beyond one end of the green innerliner 16 as it is positioned on the drum 32, to form the overlap 30. To facilitate visual detection after cure, the overlap 30 may be colored so as to contrast with the black of the innerliner 16.

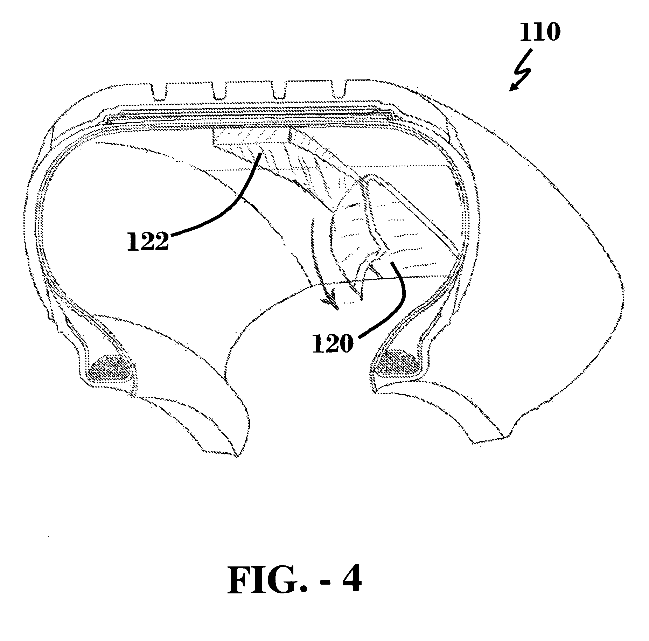

The green tire assembly 10 is removed from the drum 32 and can be stored with the barrier layer 20 protecting the foam noise damper 22. The innermost surface is then sprayed with lining cement, which completely or partially covers the barrier layer 20, and the green assembly 10 is placed in a curing press to be conventionally cured. FIG. 4 shows a cured tire assembly 110 after removal from a curing press. After the cured tire assembly 110 is removed from the press, the inside of the tire may be vacuumed to remove lining cement, which is generally loosely attached to the barrier layer 20. As seen in FIG. 4, the barrier layer 120 is then manually removed in one piece by pulling for example on the protruding 130 of barrier layer 120. The foam noise damper 122 is exposed, and is free of lining cement. After removal of the barrier layer 120, the foam noise damper 122 relaxes and expands to its full volume.

Application of the foam noise damper 22 to the drum 32 may cause the excessive stress on the foam leading to undesirable tears in the foam. To prevent tearing of the foam on the drum 32, at least one slit or notch may be made in the cross section of the foam noise damper perpendicular to the circumferential direction of the drum. The one or more slits or notches may be made to a depth in the foam sufficient to prevent tearing upon application of the foam noise damper 22 to the drum 32.

Application of the barrier layer 20 as illustrated in FIGS. 2 and 3 is usable in the case of a barrier layer made of a material that will stretch and survive the stress applied during the tire building process. In the case of a barrier layer made of a material that does not have sufficient stretch to survive the tire building process, rather than application of the barrier layer during the tire building process, the barrier layer 20 may instead be applied over foam noise damper 22 and to the virgin green surface of the innerliner of a completed but uncured green tire after the tire building process. The foam noise damper 22 likewise may be applied during the tire building process, or afterwards to the green tire as desired and depending on the ability of the foam to stretch and resist the stress of the tire building process. Such a green tire having the barrier layer applied after the tire building process would then be cured in a tire mold, with the inner liner surface protected as described previously herein.

In one embodiment, the barrier layer is a thermoformable film. In order to expand with the innerliner during green tire building and curing, the thermoformable film should exhibit the property of necking, which refers to the ability of a material to stretch without returning back to its original shape. The film advantageously exhibits necking in at least one direction, and preferably in both directions, usually referred to as the machine direction (MD) and cross direction (CD). The necking force, in accordance with room temperature testing at a cross-head speed of 50.8 cm/min (20 inch/min), is advantageously below 111.2 N (25 lbf), and more advantageously below 89 N (20 lbf), in at least one direction, and preferably in both directions, for a 2.54 cm wide strip. Non-oriented films are desirable, though partially oriented films may also be used. Non-oriented films may be characterized by essentially equal necking forces in both the machine and cross directions.

Further, the thermoformable film should exhibit a melting point greater than the curing temperature of the tire assembly, which is generally in the range of 121ºC (250ºF) to 200ºC (392ºF). The thermoformable film should further have sufficient strength to be removed from the innerliner in a single piece for ease of manufacture. In an exemplary embodiment, the thermoformable film may be overlapped to form a pull-tab to facilitate easy removal of the film, and the overlapped portion of the film must not fuse together. In one embodiment, the thermoformable film has a thickness less than 5 mils (127 µm), for example less than 3 mils (76.2 µm). In another embodiment, the thermoformable film has a thickness greater than 0.6 mil (15 µm), for example, greater than 0.75 mil (19 µm). Nylon 6 and nylon 6,6 films on the order of 0.75 mil (19 µm) to 2 mils (50.8 µm) thick may serve as exemplary thermoformable films in the present invention. Exemplary films include: CAPRAN^{®} Nylon, which is a multipurpose nylon 6 film commercially available from Honeywell, International, Pottsville, Pennsylvania; fluorinated ethylenepropylene (FEP) films, such as TEFLON^{®} FEP fluorocarbon film from DuPont Films or A4000 from Airtech International, Inc.; 1-phenyl-3-methyl-5-pryrazolone (PMP) films, such as PMP Release Film from Honeywell; and C917 DARTEK^{®}, which is a nylon 6,6 film available from Exopack Canada. Necking force, maximum tensile strength, % elongation and thickness for these exemplary films (2.54 cm wide) are provided below in Table 1. Exemplary thermoformable films are those that are non-oriented or only partially oriented and exhibit a necking force in both the machine direction and cross direction of less than 88.96 N (20 lbf).

**Table 1**

| **Sample** | **mil** | **µm** | **Max Tensile (MPa)** | **Necking (lbf)** | **Elongation (%)** |
|---|---|---|---|---|---|
| TEFLON^{®} FEP (MD) | 1 | 25.4 | 22 | 2.25 | 393 |
| TEFLON^{®} FEP (CD) | 1 | 25.4 | 23.5 | 2.6 | 272 |
| PMP (MD) | 1 | 25.4 | 28 | 3.5 | 107 |
| PMP (CD) | 1 | 25.4 | 28 | 2.5 | 90 |
| C917 DARTEK^{®},(MD) | 2.0 | 50.8 | 173 | 11.5 | 202 |
| C917 DARTEK^{®},(CD) | 2.0 | 50.8 | 118 | 11.25 | 128 |
| C917 DARTEK^{®},(MD) | 0.75 | 19 | 48.9 | 4.5 | 90 |
| C917 DARTEK^{®},(CD) | 0.75 | 19 | 47.7 | 4.25 | 59 |
| CAPRAN^{®} Nylon (MD) | 1 | 25.4 | 61 | 7 | 118 |
| CAPRAN^{®} Nylon (CD) | 1 | 25.4 | 63 | 6 | 60 |

| | | | | | |
|---|---|---|---|---|---|
| (1 lbf = 4.448 Newton) (1 mil = 25.4 µm) | | | | | |

By way of further example, nylon films are particularly useful in the method of the present invention. Examples of nylons which may be formed into film are linear polycondensates of lactams of 6 to 12 carbon atoms and conventional polycondensates of diamines and dicarboxylic acids, e.g. nylon 6,6; nylon 6,8; nylon 6,9; nylon 6,10; nylon 6,12; nylon 8,8; and nylon 12,12. Further examples to be mentioned are nylon 6, nylon 11 and nylon 12, which are manufactured from the corresponding lactams. In addition, it is possible to use polycondensates of aromatic dicarboxylic acids, e.g., isophthalic acid or terephthalic acid, with diamines, e.g., hexamethylenediamine, or octamethylenediamine, polycarbonates of aliphatic starting materials, e.g., m- and p-xylylenediamines, with adipic acid, suberic acid and sebacic acid, and polycondensates based on alicyclic starting materials, e.g., cyclohexanedicarboxylic acid, cyclohexanediacetic acid, 4,4'-diami nod icyclohexylmethane and 4,4'-diaminodicyclohexylpropane.

In one embodiment, the barrier layer is an adherent, removable, inner rubber strip adhered to the innerliner of the tire.

In this embodiment, the barrier layer as a removable, rubber strip comprising a rubber admixture of (A) 50 to 100, preferably 60 to 90, parts by weight butyl rubber and, correspondingly, (B) 50 to 0, preferably 40 to 10, parts by weight of an ethylene/propylene/nonconjugated diene terpolymer rubber.

It is understood that the rubber strip can also contain conventional rubber compounding ingredients including processing oil, accelerators, conventional sulfur curing agents, pigments, carbon black, zinc oxide, stearic acid, tackifying resin, and plasticizer.

In the practice of this invention, it is required that the said rubber strip is covulcanized with the tire in the sense that the uncured rubber strip is built onto the innerliner as a part of the green, or uncured, tire construction. Thus, in the molding and curing operation for producing the tire, the strip and green tire cure substantially simultaneously.

In one embodiment, the cocured rubber strip barrier layer has a relatively low adhesion to the inside surface of the tire of less than about 10 lbs. per linear inch (1.8 Kg/linear cm), so that it can conveniently be pulled out by hand or by machine, and a tack value in the range of 10 to 30 Newtons so that it will adequately adhere, or stick, to the inside surface of the green tire.

The adherent, removable, rubber strip typically has a thickness in the range of 0.01 to 0.1 inches (0.025-0.25 cm), preferably 0.02 to 0.08 inches (0.05-0.2 cm). After the tire containing the rubber strip on its innerliner has been shaped and cured, the co-cured rubber strip as the barrier layer can simply be removed by hand or by manual or automatic device. The rubber sheet can be color-coded with a pigment to contrast with the color of the tire itself so that it can be readily apparent whether it has actually been removed prior to further processing of the tire.

The butyl rubber for the rubber strip is generally of the type prepared by polymerizing a mixture of isobutylene and isoprene, with the major portion being isobutylene. The butyl rubber typically has an average molecular weight in excess of 200,000, preferably in the range of 200,000 to 600,000 and even more preferably in the range of 200,000 to 400,000.

The vulcanized rubber tire itself can be of various sulfur curable rubbers such as natural rubber and synthetic rubber and their mixtures or blends. For example, it can be at least one of rubbery butadiene/styrene copolymer, butadiene/acrylonitrile copolymer, cis-1,4 polyisoprene (natural or synthetic), polybutadiene, isoprene/butadiene copolymer, butyl rubber, halogenated butyl rubber, such as chloro or bromobutyl rubber, ethylene/propylene copolymer or ethylene/propylene terpolymer (EPDM). Typically the various polymers are cured or vulcanized by normal sulfur curing methods and recipes.

In particular, although other portions of the tire can be of such rubbers, the innerliner virgin surface of the tire to which the rubber strip is covulcanized typically and preferably comprises a butyl-type rubber, natural rubber, or mixture thereof. Such butyl-type rubber can conveniently be selected from at least one of butyl rubber or a halobutyl rubber such as chlorobutyl or bromobutyl rubber.

The vulcanized rubber tire itself can be of various sulfur curable rubbers such as natural rubber and synthetic rubber and their mixtures or blends. For example, it can be at least one of rubbery butadiene/styrene copolymer, butadiene/acrylonitrile copolymer, cis-1,4 polyisoprene (natural or synthetic), polybutadiene, isoprene/butadiene copolymer, butyl rubber, halogenated butyl rubber, such as chloro or bromobutyl rubber, ethylene/propylene copolymer or ethylene/propylene terpolymer (EPDM). Typically the various polymers are cured or vulcanized by normal sulfur curing methods and recipes.

An exemplary recipe for the rubber strip used as a barrier layer is shown in Table 2. The rubber strip, for this example, may be prepared according to the following recipe in which the ingredients of Table 2a are mixed in a Banbury mixer and the resultant mixture mixed on a mill with the ingredients of Table 2b.

**Table 2a**

| Compound | Parts |
|---|---|
| Butyl rubber | 70.0 |
| EPDM¹ | 30 |
| Carbon Black (FEF) | 50 |
| Stearic Acid | 1.5 |
| Zinc Oxide | 2.0 |
| Tackifying Resin² | 8.0 |

| | |
|---|---|
| ¹ Ethylene/propylene/diene rubber obtained as Nordel 1320, Nordel being a trademark of the DuPont de Nemours, E.I. Co. ² Hydrocarbon derived tackifying resin of the diolefin/olefin copolymer type having a softening point in the range of 94°C to 98ºC. | |

**Table 2b**

| Compound | Parts |
|---|---|
| Mercaptobenzothiazole | 1.0 |
| Tetramethylthiuram disulfide | 1.25 |
| Sulfur | 2.0 |

In one embodiment, it may be desirable to include a tackifier in the recipe for the rubber composite strip as a building aid during the building of the green tire itself. In this regard, generally 2 to 10 parts by weight of resin tackifier for said EPDM and butyl rubbers is used. Suitable tackifiers include terpene resins and synthetic hydrocarbon-derived resins having a softening point in the range from 50º to 110ºC.

For example, such resins can be prepared by polymerizing hydrocarbon monomers in the presence of the catalyst such as aluminum chloride or boron trifluoride or boron trifluoride etherate. Such monomers, for example, can be a mixture of diolefin and monoolefin hydrocarbons containing from 4-6 carbon atoms. For example, piperylene can be copolymerized with methyl branched α -olefin containing 5-6 carbon atoms.

The optional PSA (pressure sensitive adhesive) is a rubber-based adhesive that is compatible with the rubber of the innerliner. As is known in the adhesive art, PSA's typically principally comprise a polymer system, one or more tackifiers, and one or more plasticizers. In the present invention, the polymer system for the PSA is rubber-based so as to be compatible with the rubber of the innerliner. Without being bound by theory, during curing of the tire assembly, the PSA is believed to lose its status as a PSA, due to migration of the tackifier and/or other materials and/or degradation of the PSA at high temperature. When the thermoformable film is removed, all or some of the PSA, or former PSA, may be removed with the film and/or some or all may remain on or as part of the innerliner. Again, without being bound by theory, if the PSA composition is based on a rubber that is compatible with the rubber of the innerliner, then during curing, the degrading PSA may, in whole or part, migrate into the innerliner surface, thereby becoming part of the cured virgin innerliner surface. Alternatively, it may leave a cohesively-bonded surface coating, but that coating is itself an innerliner-type rubber and is free of release agent, thus being essentially the same as the cured virgin innerliner surface. Thus, in an exemplary embodiment, the PSA is curable during tire vulcanization to cohesively bond with or become a part of the tire innerliner.

In one embodiment, the PSA may be a natural rubber-based, butyl rubber-based, halobutyl rubber-based or polybutadiene rubber-based adhesive, or combination thereof, since these rubbers are commonly used tire materials. By "rubber-based" is meant that the rubber is the principle component of the PSA, i.e., the component present in the greatest quantity. In a further exemplary embodiment, the PSA is a permanent grade hot-melt PSA. An exemplary PSA is commercially available from H.B. Fuller Company, Vadnais Heights, MN, as a permanent grade, hot-melt PSA under Product Number HL2201X. Another PSA is Product Number G1110 from 3M (formerly Emtech). The PSA adheres the thermoformable film reliably to the innerliner surface, and yet allows the thermoformable film to be removed therefrom after curing the tire assembly.

The PSA may be coated onto the thermoformable film by any desirable method, such as solvent coating or hot melt extrusion coating. A film could also be purchased pre-coated. The PSA-coated film may be adhered by any pressure suitable for the particular type of adhesive. For example, hand pressure may be used to adhere to the PSA to the innerliner, or a roller, such as a 2.54 cm roller, may be rolled along the surface of the PSA-coated film to adhere the PSA.

A cured tire 110 having the barrier film removed is depicted in FIG - 5. In FIG - 5, tire 110 is shown with tread 113, tread grooves imparted to the tread 113 during cure, carcass 112, beads 114, and innerliner 116. The foam noise damper 122 is fixed to the inside of the innerliner 116 radially inward of the tread 113, as shown in FIG - 5. Accordingly, to deform easily during running and not to affect the running performance such as steering stability, the material of the damper is preferably a light-weight low-density flexible material, e.g. foamed rubber, foamed synthetic resins, cellular plastics and the like. In the case of foamed materials (or sponge materials), an open-cell type and a closed-cell type can be used, but an open-cell type is preferred. For example, synthetic resin foams such as ether based polyurethane foam, ester based polyurethane foam, polyethylene foam and the like; rubber foams such as chloroprene rubber foam, ethylene-propylene rubber foam, nitrile rubber foam, silicone rubber foam and the like can be used. In particular, suitable foams must be able to resist the high temperature and pressure environment present during the tire molding process. In one embodiment, an open-cell type foam material is used.

For the method of the present invention a silicone rubber foam is used. In one embodiment, the silicone rubber foam has a specific gravity ranging from 0.01 to 0.4. In one embodiment, the silicone rubber foam has a specific gravity ranging from 0.015 to 0.3. In one embodiment, the silicone rubber foam has a specific gravity ranging from 0.025 to 0.25. Suitable silicone rubber is as Magnifoam MF1-6535 having a density of 6.5 Ib/ft³ (specific gravity 0.1).

In the embodiment utilizing silicone rubber foam, to ensure adhesion of the silicone rubber foam to the innerliner use of an adhesive is necessary. The adhesive is applied to the innerliner prior to application of the silicone rubber foam. In one embodiment, the adhesive is an acrylic adhesive. Suitable acrylic adhesive is available commercially as 6038 adhesive transfer tape from 3M.

Depending on the environment where the tire is used, there is a possibility that the air which fills the tire cavity to inflate the tire is humid and the water makes condensation in the closed cavity. Accordingly, foam materials which are hard to be hydrolyzed such as ether based polyurethane are suitably used.

Further, in order to prevent water from penetrating into the noise damper, a water repellent treatment can be preferably made on the foam material. Also, a mildewproof treatment can be preferably made.

Furthermore, in order to avoid poison in the emission gas generated when incinerating scrap tires, it is preferred that raw materials not including halogen are used to make the foam material.

By disposing a certain volume of the foam material in the tire cavity, resonances of the air in the cavity can be controlled and vibrations of the tread portion are reduced. Therefore, noise generated from the tire during running can be reduced. In particular, reduction of noise due to tire cavity resonance measured at a frequency of 200 to 300 Hz is desirable.

The foam noise damper has a specific gravity and dimensions suitable to reduce noise level due to tire cavity resonance at 200 to 300 Hz. In one embodiment, the foam has a specific gravity greater in a range of 0.005 to 0.06 (5 to 60 kg/m³). In one embodiment, the foam noise damper has a thickness in the tire radial direction ranging from 10 to 50 mm. In one embodiment, the foam noise damper has a width in the axial tire direction ranging from 30 to 150 mm. In one embodiment, the foam noise damper is disposed circumferentially about the tire.

The foam noise damper 22 is fixed to the innerliner radially inward of the tread, and is secured adhesively to the green rubber of innerliner 16. Upon cure of the tire, the foam noise damper 122 and cured rubber of the innerliner 16 are adhesively attached. Alternatively, the foam noise damper 122 may be fixed using an adhesive applied directly to the foam or as double-sided adhesive tape.

As to the adhesive, in one embodiment an adhesive tape having a base tape with a coat or layer of an adhesive material on one side and a coat or layer of an adhesive material on the other side may be used. In one embodiment, an adhesive tape having no base tape and made up of only double layers of different adhesive materials may be used. In one embodiment, an adhesive made up of only a single layer of an adhesive material may be used.

In the case of adhesive tape, the base tape may be, for example: plastic film such as polyester; sheet of plastic foam such as acrylic foam; nonwoven fabric or bonded material; or a woven textile.

As to the adhesive material, for example, a rubber-based adhesive comprising natural rubber and/or synthetic rubber and additives, e.g. tackifier, softener, or age resistor; an acrylic pressure sensitive adhesive comprising a plurality of copolymers of an acrylic ester and a polyfunctional monomer having different glass-transition temperatures (containing pressure sensitive adhesives of high heat resistant type, flame resistant type and low-temperature adhesion type); a silicone pressure sensitive adhesive comprising a silicone rubber and a resin; a polyether adhesive; or a polyurethane adhesive may be suitably used.

The use of a thermosetting adhesive comprising a thermosetting resin, e.g. epoxy resin or the like is not preferred in view of the production efficiency because the adhesive needs to be heated up to 130ºC for 30 minutes.

As to the adhesive materials, it is possible to use the same adhesive material, but it may be desirable to use different types of adhesive materials. For example, a rubber adhesive which adheres strongly to the tire rubber, and an acrylic pressure sensitive adhesive which adheres strongly to the noise damper are used on the respective sides of an adhesive tape or adjacently.

The invention is further illustrated by the following examples.

### Example 1

In this comparative example, the effect of curing a polyurethane foam attached to an innerliner compound is illustrated.

A polyurethane foam strip (specific gravity 0.03 - 0.05 g/cm³) was applied to a sheet of green innerliner compound to form a layered structure. The layered structure was then cured for 23 min at 150°C under 690 kPa pressure in a bladder mold. Inspection of the cured layered structure after release of pressure showed that the foam was flattened and did not recover to its original shape.

### Example 2

In this example, the effect of curing a silicone rubber foam attached to an innerliner compound is illustrated.

A silicone rubber foam strip (MF1-6535, density 0.1 g/cm³, from Roger Corporation) was applied to a sheet of green innerliner compound to form a layered structure. The layered structure was then cured for 23 min at 150°C under 690 kPa pressure in a bladder mold. Inspection of the cured layered structure after release of pressure showed that the foam recovered to its original shape but was not sticking to rubber innerliner compound.

### Example 3

In this example, the effect of curing a silicone rubber foam attached to the innerliner of a green tire is illustrated.

A silicone rubber foam strip (MF1-6535, density 6.5 lb/ft3, from Roger Corporation, with double sided acrylate adhesive from 3M, 3M-3068) was attached to the innerliner in the crown area of a fully constructed green tire. Silicone mold release spray was applied and the tire was then cured in a tire mold at 169°C for 14 minutes under 1793 kPa pressure. Upon release from the mold, the foam recovered its original shape but was wet to touch due to the mold release agent.

### Example 4

In this example, the effect of curing a protected silicone rubber foam attached to the innerliner of a green tire is illustrated.

A silicone rubber foam strip (MF1-6535, density 6.5 lb/ft3, from Roger Corporation with double sided acrylate adhesive from 3M, 3M-3068) was attached to the innerliner in the crown area of a fully constructed green tire. The foam was covered with 50.8 mm (2 mil) thick Dartek C917 nylon 6,6 film; the film was wide enough to cover the foam and attach the edges of the film to the innerliner surface. Silicone mold release spray was applied and the tire was then cured in a tire mold at 169°C for 14 minutes under 1793 kPa pressure. Upon release from the mold, the film was removed exposing the foam. The foam recovered to its original shape and was free of release agent.

As seen from the results of Examples 1 through 4, a silicone rubber foam noise damper applied to a green tire is able to recover its original shape and therefore survives the conditions of temperature and pressure experienced by a green tire during cure as its melt temperature (204°C) is above the cure conditions. By contrast, a polyurethane foam noise damper remained flattened as its melt temperature is below the cure conditions and therefore does not survive these conditions. This is significant because in order to be an effective noise damper, the foam noise damper should be fully expanded into its fully foamed condition.

Use of the barrier film further protected the silicone rubber foam from the effects of the silicone release spray.

## Claims

1. A method for making a tire having a foam noise damper (22, 122), the method comprising the steps of:
disposing a silicone rubber foam noise damper (22, 122) onto an exposed virgin surface of a green innerliner (16) of a green tire (10);
disposing a barrier layer (20, 120) over the silicone rubber foam noise damper (22, 122);
curing the green tire (10); and
removing the barrier layer (20, 120) to reveal the silicone rubber foam noise damper (22, 122).

2. The method of claim 1, further comprising the step of applying an adhesive to the exposed virgin surface prior to disposing the foam noise damper (22, 122) onto the exposed virgin surface, wherein the adhesive is between the foam noise damper and the virgin surface.

3. The method of at least one of the previous claims, further comprising the step of attaching at least one edge of the barrier layer (20, 120) to the virgin surface of the green tire innerliner (16).

4. The method of at least one of the previous claims, wherein the barrier layer (20, 120) is a thermoformable film, a nylon film or a rubber strip.

5. The method of at least one of the previous claims, wherein the barrier layer (20, 120) is a rubber strip comprising butyl rubber and ethylene-propylene-diene (EPDM) rubber.

6. The method of at least one of the previous claims, wherein the barrier layer (20, 120) is a rubber strip, and the rubber strip is co-vulcanized with the green innerliner (16).

7. The method of claim 1, wherein the silicone rubber foam noise damper (22, 122) has a specific gravity ranging from 0.01 to 0.4, alternatively from 0.015 to 0.3.

8. The method of at least one of the previous claims, wherein the silicone rubber foam noise damper (22, 122) has a specific gravity ranging from 0.025 to 0.25.

9. The method of at least one of the previous claims, wherein the foam noise damper (22, 122) is secured to the virgin surface using an adhesive.

10. The method of at least one of the previous claims, wherein the foam noise damper (22, 122) is secured to the virgin surface using double sided tape.

11. The method of at least one of the previous claims, wherein the foam noise damper (22, 122) comprises at least one cross-sectional slit or notch, the at least one slit or notch being perpendicular to the circumferential direction of the green tire (10).

12. The method of at least one of the previous claims, wherein the barrier layer (20, 120) and/or the foam noise damper (22, 122) is applied during a tire building process on a tire building drum (32).

13. The method of at least one of the previous claims, wherein the foam noise damper (22, 122) and the barrier layer (20, 120) are applied to an already-constructed green tire (10).

## Patentansprüche

1. Verfahren zur Herstellung eines Reifens, der einen Schaumstoffgeräuschdämpfer (22, 122) aufweist, wobei das Verfahren die Schritte umfasst des:
Anordnens eines Silikonkautschuk-Schaumstoffgeräuschdämpfers (22, 122) auf einer freiliegenden fabrikneuen Oberfläche eines Innenisolierungs-Rohlings (16) eines Reifenrohlings (10);
Anordnens einer Barriereschicht (20, 120) über dem Silikonkautschuk-Schaumstoffgeräuschdämpfer (22, 122);
Vulkanisierens des Reifenrohlings (10); und
Entfernens der Barriereschicht (20, 120), um den Silikonkautschuk-Schaumstoffgeräuschdämpfer (22, 122) freizulegen.

2. Verfahren nach Anspruch 1, weiter den Schritt des Anbringens eines Klebstoffs an der freiliegenden fabrikneuen Oberfläche vor dem Anordnen des Schaumstoffgeräuschdämpfers (22, 122) auf der freiliegenden fabrikneuen Oberfläche umfassend, wobei der Klebstoff sich zwischen dem Schaumstoffgeräuschdämpfer und der fabrikneuen Oberfläche befindet.

3. Verfahren nach mindestens einem der vorgenannten Ansprüche, weiter den Schritt des Befestigens mindestens einer Kante der Barriereschicht (20, 120) an der fabrikneuen Oberfläche des Reifeninnenisolierungs-Rohlings (16) umfassend.

4. Verfahren nach mindestens einem der vorgenannten Ansprüche, wobei die Barriereschicht (20, 120) eine thermoverformbare Folie, eine Nylonfolie oder ein Gummistreifen ist.

5. Verfahren nach mindestens einem der vorgenannten Ansprüche, wobei die Barriereschicht (20, 120) ein Gummistreifen ist, der Butylkautschuk und Ethylen-Propylen-Dien(EPDM)-Kautschuk umfasst.

6. Verfahren nach mindestens einem der vorgenannten Ansprüche, wobei die Barriereschicht (20, 120) ein Gummistreifen ist und der Gummistreifen mit dem Innenisolierungs-Rohling (16) covulkanisiert wird.

7. Verfahren nach Anspruch 1, wobei der Silikonkautschuk-Schaumstoffgeräuschdämpfer (22, 122) ein spezifisches Gewicht im Bereich von 0,01 bis 0,4, alternativ von 0,015 bis 0,3, hat.

8. Verfahren nach mindestens einem der vorgenannten Ansprüche, wobei der Silikonkautschuk-Schaumstoffgeräuschdämpfer (22, 122) ein spezifisches Gewicht im Bereich von 0,025 bis 0,25 hat.

9. Verfahren nach mindestens einem der vorgenannten Ansprüche, wobei der Schaumstoffgeräuschdämpfer (22, 122) unter Verwendung eines Klebstoffs an der fabrikneuen Oberfläche befestigt wird.

10. Verfahren nach mindestens einem der vorgenannten Ansprüche, wobei der Schaumstoffgeräuschdämpfer (22, 122) unter Verwendung doppelseitigen Klebebands an der fabrikneuen Oberfläche befestigt wird.

11. Verfahren nach mindestens einem der vorgenannten Ansprüche, wobei der Schaumstoffgeräuschdämpfer (22, 122) mindestens eine(n) Querschnitts-Schlitz oder -Kerbe umfasst, wobei der mindestens eine Schlitz bzw. die mindestens eine Kerbe senkrecht zur Umfangsrichtung des Reifenrohlings (10) ist.

12. Verfahren nach mindestens einem der vorgenannten Ansprüche, wobei die Barriereschicht (20, 120) und/oder der Schaumstoffgeräuschdämpfer (22, 122) während eines Reifenbauvorgangs auf einer Reifenbautrommel (32) angebracht wird.

13. Verfahren nach mindestens einem der vorgenannten Ansprüche, wobei der Schaumstoffgeräuschdämpfer (22, 122) und die Barriereschicht (20, 120) an einem bereits aufgebauten Reifenrohling (10) angebracht werden.

## Revendications

1. Procédé pour confectionner un bandage pneumatique possédant un amortisseur des bruits en mousse (22, 122), le procédé comprenant les étapes consistant à :
disposer un amortisseur des bruits en mousse à base de caoutchouc de silicone (22, 122) sur une surface vierge exposée d'un calandrage intérieur non vulcanisé (16) d'un bandage pneumatique non vulcanisé (10) ;
disposer une couche faisant office de barrière (20, 120) pardessus l'amortisseur des bruits en mousse à base de caoutchouc de silicone (22, 122) ;
vulcaniser le bandage pneumatique cru (10) ; et
retirer la couche faisant office de barrière (20, 120) pour mettre à nu l'amortisseur des bruits en mousse à base de caoutchouc de silicone (22, 122).

2. Procédé selon la revendication 1, comprenant en outre l'étape consistant à appliquer un adhésif sur la surface vierge exposée avant de disposer l'amortisseur des bruits en mousse à base de caoutchouc de silicone (22, 122) sur la surface vierge exposée, l'adhésif étant disposé entre l'amortisseur des bruits en mousse et la surface vierge.

3. Procédé selon au moins une des revendications précédentes, comprenant en outre l'étape consistant à fixer au moins un bord de la couche faisant office de barrière (20, 120) à la surface vierge du calandrage intérieur de bandage pneumatique non vulcanisé (16).

4. Procédé selon au moins une des revendications précédentes, dans lequel la couche faisant office de barrière (20, 120) est un film thermoformable, un film en nylon ou un ruban de caoutchouc.

5. Procédé selon au moins une des revendications précédentes, dans lequel la couche faisant office de barrière (20, 120) est un ruban de caoutchouc comprenant du caoutchouc butyle et du caoutchouc d'éthylène-propylène-diène (EPDM).

6. Procédé selon au moins une des revendications précédentes, dans lequel la couche faisant office de barrière (20, 120) est un ruban de caoutchouc et le ruban de caoutchouc est covulcanisé avec le calandrage intérieur non vulcanisé (16).

7. Procédé selon la revendication 1, dans lequel l'amortisseur des bruits en mousse à base de caoutchouc de silicone (22, 122) possède une densité relative se situant dans la plage de 0,01 à 0,4, en variante de 0,015 à 0,3.

8. Procédé selon au moins une des revendications précédentes, dans lequel l'amortisseur des bruits en mousse à base de caoutchouc de silicone (22, 122) possède une densité relative se situant dans la plage de 0,025 à 0,25.

9. Procédé selon au moins une des revendications précédentes, dans lequel l'amortisseur des bruits en mousse à base de caoutchouc de silicone (22, 122) est fixé à la surface vierge en utilisant un adhésif.

10. Procédé selon au moins une des revendications précédentes, dans lequel l'amortisseur des bruits en mousse à base de caoutchouc de silicone (22, 122) est fixé à la surface vierge en utilisant un ruban adhésif double face.

11. Procédé selon au moins une des revendications précédentes, dans lequel l'amortisseur des bruits en mousse à base de caoutchouc de silicone (22, 122) comprend au moins une fente ou une encoche en section transversale, ladite au moins une fente ou encoche étant perpendiculaire à la direction circonférentielle du bandage pneumatique (10) non vulcanisé.

12. Procédé selon au moins une des revendications précédentes, dans lequel la couche faisant office de barrière (20, 120) et/ou l'amortisseur des bruits en mousse à base de caoutchouc de silicone (22, 122) sont appliquées au cours d'un processus de confection d'un bandage pneumatique sur un tambour de confection de bandage pneumatique (32).

13. Procédé selon au moins une des revendications précédentes, dans lequel l'amortisseur des bruits en mousse à base de caoutchouc de silicone (22, 122) et la couche faisant office de barrière (20, 120) sont appliqués sur un bandage pneumatique non vulcanisé (10) déjà confectionné.
